# EUROPÄISCHE PATENTSCHRIFT

(11) **EP 0 503 615 B1**
(45) Veröffentlichungstag und Bekanntmachung des Hinweises auf die Patenterteilung: **11.12.1996**
(21) Anmeldenummer: 92104257.8
(22) Anmeldetag: 12.03.1992
(51) Int. Cl.: B65G 49/06, B60P 3/00

(54) **Trägeraufbau als Lager- und Transportgestell zur Lagerung und/oder zum Transport von flächigen Gegenständen sowie Trägeraufbau für Transportfahrzeuge zum Transport von flächigen Gegenständen**
Rack for stapling and transporting flat objects and rack for a carrying truck for the transport of flat objects
Chassis de support et de transport pour le stockage et le transport d'objets plats ainsi que chassis de support pour véhicules de transport d'objets plats

(30) Priorität: 13.03.1991 DE 4107975
(43) Veröffentlichungstag der Anmeldung: 16.09.1992
(73) Patentinhaber: HEGLA Fahrzeug- u. Maschinenbau GmbH & Co. KG, D-37688 Beverungen (DE)
(72) Erfinder: Glaser, Siegfried, W-3472 Beverungen 1 (DE)
(74) Vertreter: Reichel, Wolfgang, Dipl.-Ing.

(56) Entgegenhaltungen:
- DE-U- 9 102 971
- FR-A- 1 176 630
- US-A- 2 100 971
- US-A- 2 159 672

## Beschreibung

Die Erfindung bezieht sich auf einen Trägeraufbau als Lager- und Transportgestell zur Lagerung und/oder zum Transport von flächigen Gegenständen gemäß dem Oberbegriff des Anspruchs 1. Die Erfindung befaßt sich ferner mit einem Transportfahrzeug mit Trägeraufbau zum Transport von flächigen Gegenständen gemäß dem Oberbegriff des Anspruchs 2.

Es werden unterschiedliche, vertikal zu lagernde und/oder zu transportierende flächige Gegenstände, wie z.B. Kunststoffplatten oder Blechtafeln auf ähnlichen Trägeraufbauten, wie sie für die Lagerung und den Transport von Flachgläsern konzipiert sind, gelagert bzw. transportiert.

Aufgrund der folgenden im einzelnen diskutierten Aspekte sind Trägeraufbauten einerseits insbesondere für den Transport der flächigen Gegenstände ab einer bestimmten Größe unentbehrlich und erfordern andererseits spezielle Eigenschaften, um einen sicheren Transport zu gewährleisten oder auch eine praktikable Lagerung zu gestatten.

Damit Glastafeln beim Be- und Entladen ohne Verspannung auf dem Trägeraufbau stehenbleiben und nicht von selbst herunterfallen, weisen die Aufbauten eine schräggestellte Ebene mit etwa 5° bis 7° Schrägstellung gegen die Vertikale auf. Dies gilt sowohl für einen Trägeraufbau, der gegebenenfalls mittels Kran bewegbar ist oder auf Rollen oder Rädern läuft, sondern auch für einen an Fahrzeugen angebrachten Trägeraufbau.

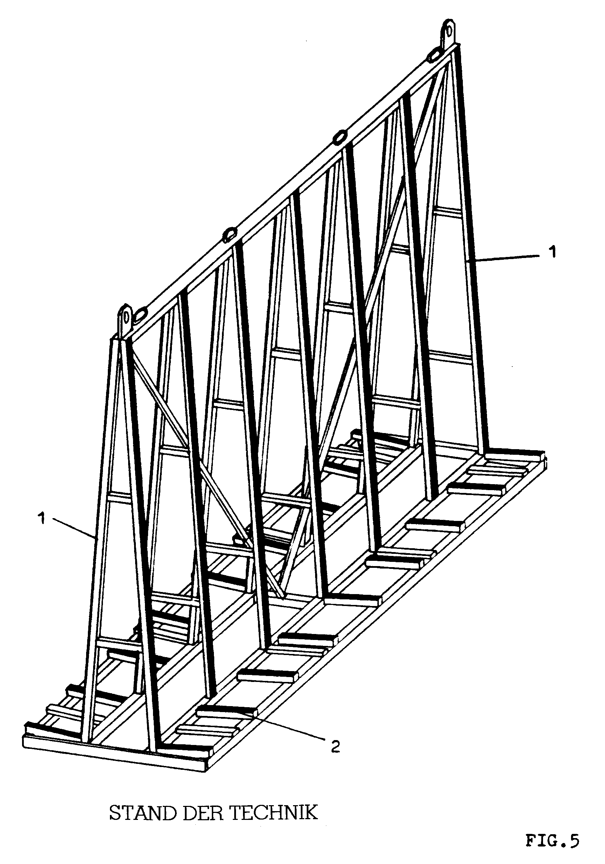

Der als Lager- und Transportgestell aufgebaute Trägeraufbau der eingangs erwähnten Art weist häufig zwei in A-Form gegeneinander gestellte schräge Gestellteile auf und er wird im Lagerbereich sowie auch zum Transport auf den Ladeflächen von Fahrzeugen eingesetzt. Die Fig. 5 zeigt einen entsprechenden typischen bekannten Trägeraufbau, der mit unterschiedlichsten Abmessungen angeboten wird. Durch die beidseitig benötigte Neigung wird zwar ein einfaches Be- und Entladen ermöglicht, jedoch ist der Platzbedarf für einen jeden derartigen Trägeraufbau sehr groß und er ist, damit er in sich starr ist, verhältnismäßig schwer ausgebildet. Es tritt eine relativ hohe Flächenbelastung für die flächigen Gegenstände auf, wodurch insbesondere während des Transports von Flachgläsern Beschädigungen in Kauf genommen werden müssen.

Man hat bereits Überlegungen angestellt, wie der Trägeraufbau solcher Lager- und Transportgestelle ausgebildet sein muß, damit die Transportgestelle rationell mit guter Raumausnutzung stapelbar sind (DE-PS 31 31 109). Dazu werden an der Innenseite der äußeren Ständer mit Abstand von deren Oberkante mit Löchern versehene Konsolen angeordnet und es sind an den die Stirnseiten der äußeren Ständer verbindenden Traversen nach unten gerichtete Einsteckzapfen vorgesehen.

Es sind andererseits klappbare Mehrwegpaletten bekannt (DE-OS 28 04 846), deren Seiten- und Rückwände aus Transportgründen klappbar ausgeführt sind. Der Tragrahmen dieser Anordnung besteht hauptsächlich aus dem Paletten-Grundrahmen. Derartige Anordnungen dienen hauptsächlich zum Transport von Autoscheiben, die auf einen horizontalen Bodenglasträger geschrägt aufgesetzt sind. Die Rückenanlagen sind entsprechend den Wölbungen und Neigungen der Scheibe einstellbar und dazu drehbar gelagert, haben jedoch nur eine Anlage- bzw. Stützfunktion.

Es sind andererseits Gestelle bekannt, mit deren Hilfe Bündel von Glasplatten oder auch einzelne Glasplatten von einer horizontalen Stellung in eine Schrägstellung umgesetzt werden können. So ist es bekannt (US-PS 3 159 672) einen mit Rollen versehenen Doppelrahmen vorzusehen, dessen beide Hälften über ein Scharniergelenk miteinander verbunden sind. Der Doppelrahmen wird in seiner horizontalen Stellung mit Glasplatten beladen und es wird dann die Mitte des Doppelrahmens nach oben gezogen bis der Doppelrahmen eine A-förmige Anordnung einnimmt, in der er mit Hilfe eines Sperriegels fixiert wird. Ein Einhängen der Gestellteile in einen Tragrahmen ist bei dieser Anordnung nicht vorgesehen. Das vorhandene Verbindungsstück zwischen den beiden Gestellteilen würde in senkrechter Stellung der Gestellteile eine stabile Anordnung gar nicht ermöglichen.

Es ist andererseits ein Plattentransportwagen bekannt (DE-OS 33 31 809), der einen Kipprahmen enthält, der mit Hilfe von Scharnieren schwenkbar gelagert ist und es ermöglicht, eine in den Rahmen eingehängte Glasplatte von einer horizontalen Stellung in eine Schrägstellung umzusetzen. Für raumsparende Lagerung ist ein derartiger Transportwagen kaum geeignet.

Flachgläser werden handelsüblich mit einer maximalen Größe von 6,100 x 3,210 m hergestellt und können aufgrund dieser Abmessungen nicht mit Hilfe eines beschriebenen Trägeraufbaus als Lager- und Transportgestell verladen werden. Abmessungen der genannten Art treten häufig bei Schaufensterscheiben auf. Auch bei großen LKWs können großflächige Platten ab etwa 2 x 2 m nicht mehr auf der werksüblichen Ladefläche mit Hilfe der beschriebenen Lager- und Transportgestelle verladen werden und man bedient sich deshalb spezieller Trägeraufbauten. Bei kleineren Transportfahrzeugen (Pritschen- und Kastentransportern) reduziert sich die ohne Trägeraufbau transportable Fläche auf etwa 1,5 m x 1,8 m. Die Trägeraufbauten sind ein- oder beidseitig an den Längsseiten von LKWs bzw. Transportern vorgesehen, wobei sie in über 90 % der Fälle fest am Fahrgestell bzw. an der Karosserie angebracht sind.

Bei den an Fahrzeugen anzubringenden Trägeraufbauten für größere Gegenstände wird ferner durch die notwendige Schrägstellung das jeweilige Fahrzeug insgesamt, selbst bei nur wenigen Zentimetern Auflagefläche für die Unterkante der flächigen Gegenstände, deutlich breiter und die Fahreigenschaften werden durch die resultierende Verlagerung des Schwerpunktes der zu transportierenden Gegenstände beeinträchtigt.

Die Breite von handelsüblichen LKW-Fahrgestellen über den Hinterrädern ist so groß, daß die seitliche Anbringung der Trägeraufbauten eine Überschreitung der gesetzlich zulässigen Gesamtbreite zur Folge hat. Dies ist gravierend, da Ausnahmegenehmigungen kaum erteilt werden.

Die handelsüblichen Pritschen- oder Kastentransporter werden ebenfalls erheblich breiter, wobei insbesondere bei Kastentransportern, die Fahreigenschaften um so mehr beeinträchtigt werden und die Karosserie um so stärker beansprucht wird, je weiter der Lastschwerpunkt durch die Aufbauten und die Beladung außerhalb der Fahrzeugkontur liegt.

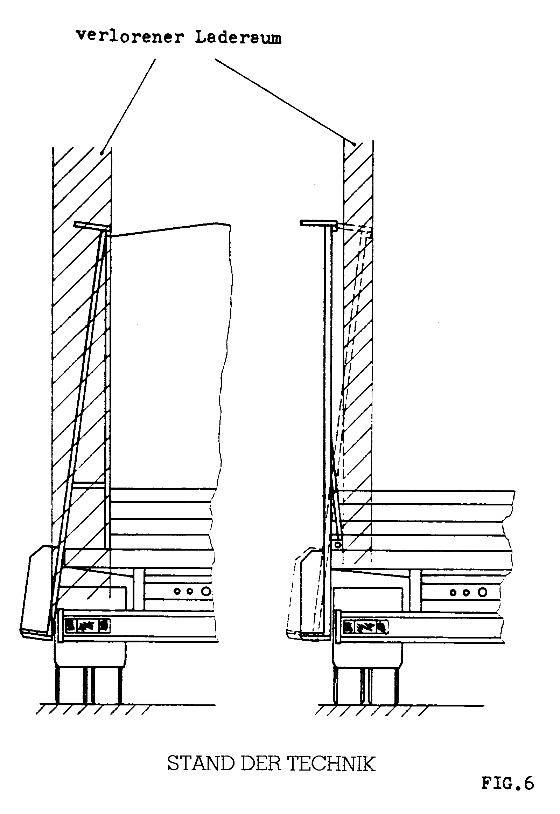

Fig. 6 macht deutlich, wie groß der Laderaumverlust bei einem Pritschenwagen ist, auf dem ein seitlich das Fahrzeug um die Breite der Auflagefläche für die flächigen Gegenstände vergrößerter Trägeraufbau angebraucht ist. Wenn man den Laderaum erhalten wollte, so wäre die Fahrzeugbreite in erheblichem Maße verbreitert.

Ferner ist aufgrund der großen Höhe und festen Trägeraufbauten an den Fahrzeugen das Auskragen der Aufbauten erheblich. Wegen der schrägen Ausbildung müssen häufig oben und unten am Kastenwagen aufwendige Halterungen vorgesehen werden. Ebenfalls sind die Abstützelemente an den Pritschen sehr stabil auszuführen, da die flächigen Gegenstände beträchtliche Drehmomente bei der Fahrt verursachen können.

Beim Transport von Flachgläsern in der Schrägstellung sind ferner die Beschädigungs- und Bruchgefahr erheblich, wobei dieser Effekt verstärkt wird, wenn verschieden große, zu transportierende Scheiben aneinanderlehnen.

Um die Beschädigungsgefahr der Flachgläser zu minimieren, ist eine möglichst vertikale Stellung während des Transports anzustreben. Der absolut vertikale Zustand ist am günstigsten. Dann treten die wenigsten fahrsituationsbedingten Beeinflussungen auf. Auch ist in diesem Fall die Flächenbelastung am geringsten.

Aus diesem Grund hat man bereits ein Transportfahrzeug mit einem Trägeraufbau der eingangs erähnten Art für Pritschenwagen mit einem Drehlager für den Schwenkrahmen an der Fahrzeugpritsche vorgeschlagen, bei denen jedoch etwa 80% der Aufbauhöhe des Schwenkrahmens über die Pritsche hinausragen, wie es im rechten Bild der Fig. 6 erkennbar ist. Ein derartiges Transportfahrzeug ist auch aus dem Prospekt "Aufbauten für Nutzfahrzeuge" der Firma Max Klemm + Co. KG, 75015 Bretten seit geraumer Zeit bekannt. Bei diesem bekannten Transportfahrzeug sind die Schwenklager der Schwenkrahmen des Trägeraufbaus in Höhe der Ladefläche des Transportfahrzeugs oder wenig oberhalb angeordnet. Wenn ein Schwenkrahmen zum Be- und Entladen in die schräggestellte Stellung verschwenkt wird, wird der obere Teil des Schwenkrahmens in die eigentliche Ladefläche des Fahrzeugs hineingeschwenkt. Das Fahrzeug muß also mindestens teilweise entladen sein oder werden, um dieses Verschwenken ausführen zu können. Da der obere Teil des Schwenkrahmens frei über den eigentlichen Trägeraufbau hinausragt, treten bei Fahrt oberhalb der Schwenklage erhebliche Drehmomente auf, die zu Schwingungen und erhöhten Transportschäden an den flächigen Gegenständen führen können. Das Drehlager und Gegenlager, an dem die Vorrichtungen zum Schwenken angelenkt sind, unterliegen ferner starkem Verschleiß.

Bei dem angegebenen Transportfahrzeug ist es zwar möglich, während des Transports für die angestrebte Senkrechtstellung zu sorgen, jedoch konnte sich diese Lösung wegen der angegebenen nachteiligen Effekte gegenüber der festen Anbringung schräggestellter Aufbauten, wie sie auch aus der linken Seite der Figur 6 hervorgehen, nicht durchsetzen.

Der Erfindung liegt die Aufgabe zugrunde, einen Trägeraufbau als Lager- und Transportgestell nach dem Oberbegriff des Anspruchs 1 bzw. auch ein Transportfahrzeug mit Trägeraufbau nach dem Oberbegriff des Anspruchs 2 anzugeben, der bzw. das Laderaum bzw. Ladefläche einspart, ohne daß sich das Gewicht des Trägeraufbaus bzw. des Transportfahrzeugs erhöht, sondern sich vielmehr verringert.

Diese Aufgabe wird einerseits bei einem Trägeraufbau als Lager- und Transportgestell der eingangs erwähnten Art durch die Merkmale des kennzeichnenden Teils des Anspruchs 1 gelöst. Die Aufgabe wird andererseits bei einem Transportfahrzeug mit Trägeraufbau nach dem Oberbegriff des Anspruchs 2 durch die Merkmale des kennzeichnenden Teils des Anspruchs 2 gelöst. Die Lösung besteht dem Prinzip nach darin, das Schwenklager am oberen Ende des nach oben ragenden Tragrahmens mit senkrechten Tragpfeilern bzw. beim Transportfahrzeug am oberen Ende von Stützpfeilern oder oben am Kastenaufbau des Transportfahrzeugs angebracht sind, mit deren Hilfe der oder die Schwenkrahmen in ihrem oberen Bereich aufgehängt sind, und daß ferner Halterungen im unteren Bereich der Schwenkrahmen zu ihrer Arretierung bzw. ihrer Abstützung in ihrer senkrechten Lage bzw. Transportstellung bzw. ihrer Schrägstellung zum Be- und Entladen vorgesehen sind.

Durch die Halterungen im unteren Bereich der senkrechten Pfeiler bzw. im unteren Bereich des oder der Schwenkrahmen werden die in unterschiedlichen Richtungen auftretenden Kräfte aufgenommmen und von dem oder den Schwenkrahmen teilweise fern gehalten. Der bzw. die Schwenkrahmen können somit leichter als bisher ausgeführt sein.

Durch die Ausbildung nach der Erfindung ist ein nutzflächensparender senkrechter Transport von flächigen Gegenständen weitgehend frei von unerwünschten Schwingungen gewährleistet, da bei dem Trägeraufbau der Tragrahmen mit senkrechtem Pfeiler bzw. beim Transportfahrzeug die Stützpfeiler oder der Kastenaufbau im Transportzustand mit den Schwenkrahmen eine Verbundeinheit bilden, die an ihrem oberen Ende bzw. an ihrem unteren Ende verbunden ist, und die in allen Richtungen verwindungssteif ist und entsprechend in allen Richtungen Kräfte aufnehmen kann. Die zur Verfügung stehende Ladefläche bzw. der zur Verfügung stehende Laderaum können aufgrund des Aufbaus optimal genutzt werden.

Bei einem Trägeraufbau als Lager- und Transportgestell läßt sich der Lagerraum auch auf einem Fahrzeug erheblich besser ausnutzen als bei einem bisher bekannten Trägeraufbau in A-Form.

Es sei hier erwähnt, daß bereits ein Gestell zur Handhabung und Lagerung von großflächigen Gegenständen insbesondere Flachglas bekannt ist (FR-A-1 176 630), das wie der als Lager- und Transportgestell ausgebildete Trägeraufbau nach Anspruch 1 schwenkbare Gestellteile (Pulte) aufweist, gegen die die zu lagernden oder zu transportierenden flächigen Gegenstände lehnen. Die Gestellteile sind bei diesem bekannten Gestell ebenfalls mit Hilfe von Schwenklagern bzw. -achsen an ihren oberen Enden miteinander verbunden und wirken damit als Schwenkrahmen. Es ist jedoch bei diesem bekannten Gestell überhaupt kein nach oben ragender Tragrahmen vorgesehen, an dem die Gestellteile aufgehängt sind. Es sind entsprechend keine Halterungen vorhanden, die die Gestellteile an ihren unteren Enden an einem Tragrahmen fixieren. Das bekannte Gestell wird vielmehr an seinen Schwenkachsen angehoben und umgesetzt. Ein Übergang des Gestells aus der Lagerungs- oder Transportstellung mit nahezu senkrechten Gestellteilen in eine Be- und Entladestellung mit geschrägten Gestellteilen wird dadurch erreicht, daß die Gestellteile über geneigte Flächen in Form eines Keils bewegt werden, so daß beide Gestellteile eine entsprechende Schräglage einnehmen. Die Gestellteile müssen verhältnismäßig starr und aufwendig gebaut sein, da das Gestell ansonsten zu wenig Belastbarkeit zeigt.

Es ist ferner ein Transportfahrzeug bekannt (US-A-2 100 971), das zwar Stützpfeiler enthält, an deren oberen Ende Schwenklager zur verschwenkbaren Aufhängung von Schwenkrahmen vorgesehen sind, wobei jedoch die Stützpfeiler nicht an den Seiten des Transportfahrzeugs gehaltert sind, sondern mittig im Fahrzeug und von dort schräg nach außen ragen, so daß die zur Verfügung stehende Ladefläche stark beschränkt ist. Ferner wird bei diesem bekannten Fahrzeug der Transport von flächigen Gegenständen gerade in der Schrägstellung der Schwenkrahmen vorgenommen, da in der senkrechten Stellung die durch die Schwenkrahmen zur Verfügung stehende Aufstellfläche aufgrund der vorstehenden Räder des Fahrzeugs sowie anderer Karosserieteile beschränkt ist. Nur in der Schrägstellung des Schwenkrahmens steht die volle Ladefläche des Schwenkrahmens zur Verfügung. In dieser Schrägstellung wird auch be- und entladen. Die senkrechte Stellung der Schwenkrahmen ist nur für Leerfahrten vorgesehen. Die Merkmale dieses bekannten Fahrzeugs reichen nicht aus, um zu den erfindungsgemäßen Lösungen zu gelangen, da danach weder nach oben ragende Tragrahmen mit senkrechten Pfeilern wie bei dem erfindungsgemäßen Trägeraufbau noch an der Seite von Fahrzeugen angebrachte Stützpfeiler bzw. oben an einem Wagenkastenaufbau angebrachte Schwenklager bekannt sind und andererseits eine Abstützung der Schwenkrahmen deren Mitte zur Justierung der Senkrechtstellung sowie der Schrägstellung vorgesehen ist, nicht jedoch in Höhe des unteren Bereichs der senkrechten Pfeiler des Tragrahmens bzw. des oder der Schwenkrahmen bei dem erfindungsgemäßen Transportfahrzeug. Erst die neuen Merkmale nach den Ansprüchen 1 und 2 schaffen die Voraussetzung für eine vollständige Ausnutzung der Ladefläche und einen weitgehend bruchfreien Transport auch großer Glasscheiben in senkrechter Stellung.

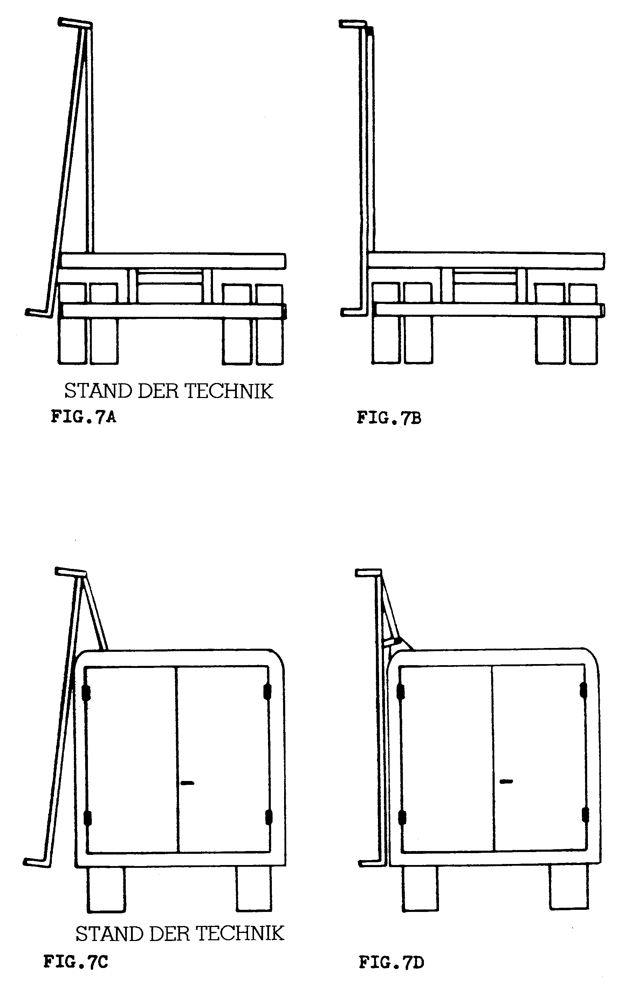

Bei der seitlichen Anbringung eines Trägeraufbaus am Fahrzeug ist es auch von Vorteil, daß wegen der Einhaltung der maximal zulässigen Fahrzeugbreite eine Beschränkung auf Pritschenwagen entfällt. Bei Kastenwagen ist eine Anbringung des Trägeraufbaus an der Dachrinne ohne großen technischen Aufbau möglich. Bei Pritschenwagen wird der Aufbau benutzt, um den Schwenkrahmen senkrecht anzuhängen. Der Vorteil der Einsparung von Laderaum und Fahrzeugbreite für die verschiedenen Fahrzeugtypen wird deutlich anhand von Fig. 7, wobei die Fig. 7A und 7B den Vorteil bei einem Pritschenwagen und die Fig. 7C und 7D bei einem Kastenwagen verdeutlichen.

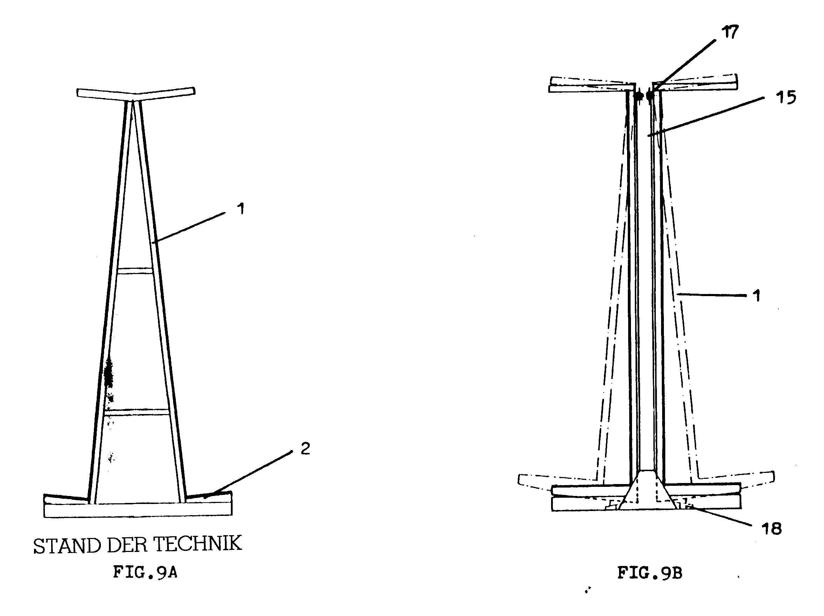

Der Vorteil bei einem Trägeraufbau als Lager- und Transportgestell bezüglich der Einsparung von Laderaum wird anhand der Fig. 9A und Fig. 9B deutlich.

Neben der Möglichkeit einer absolut vertikalen Stellung beim Transport und der bedarfsweisen Verschwenkung in die Schräglage, beispielsweise mittels mechanischer, elektromechanischer, pneumatischer oder hydraulischer Mittel ergeben sich die folgenden Vorteile. Bei einem Trägeraufbau als Lager- und Transportgestell ist wegen des senkrechten Transports der Transportbruch vermindert. Es lassen sich diese Gestelle auch wesentlich raumsparender lagern oder auf Ladeflächen eines Transportfahrzeugs unterbringen als ein bisher bekannter Trägeraufbau. Damit kann ein solcher Trägeraufbau besser quer auf der Pritsche eines LKW verladen werden. Man gewinnt etwa 30 % mehr Laderaum. Während des Transports steht die Ladung senkrecht und es treten wesentlich geringere Querkräfte auf als bei den herkömmlichen kranbaren Trägeraufbauten.

Beim Be- und Entladen können die Schwenkrahmen um eine beliebige Gradzahl von etwa 10° verschwenkt werden, so daß auch bei ungeschrägter Unterlage noch ein einwandfreies Laden und Entladen möglich ist.

Bei einem Trägeraufbau bei Transportfahrzeugen ist der Lastschwerpunkt der Ladung so nahe wie nur möglich an das Fahrgestell heranführbar.

Die Gesamtbreite des Fahrzeugs wird durch die senkrechte Aufhängung im oberen Bereich nur minimal erhöht. Hierdurch ist es möglich, die Auflagefläche von bisher nur 4 bis 5 cm bei schräggestellten Aufbauten auf etwa 15 cm zu erhöhen.

Es ist eine freie Nutzung der Laderäume auf den Fahrzeugen möglich, weil der Schwenkrahmen nicht mehr in die Ladefläche einschwenkt. Ein Be- und Entladen des seitlichen Trägeraufbaus der Ladefläche ist somit in beliebiger Weise unabhängig voneinander auszuführbar. Die Schwenkrahmen sind wegen der vertikalen Transportstellung und der Kraftaufnahme über die Halterungen leicht in ihrer Konstruktion ausbildbar. Der Schwenkrahmen kann aufgrund seiner Zugbeanspruchung weniger stabil ausgeführt werdden als bei bisherigen Anordnungen.

Der Trägeraufbau kann ohne weiteres schnell vom Fahrgestell bzw. der Karosserie demontiert werden.

Durch die Verstellmöglichkeit, vorzugsweise pneumatisch, elektromechanisch oder hydraulisch, kann eine beliebige Schrägstellung beim Be- und Entladevorgang erzielt werden. Eine Schrägstellung des gesamten Fahrzeugs bei Wind oder auch z.B. beim Parken in Schräglage können sonst dazu führen, daß die entsicherten flächigen Gegenstände vom Trägeraufbau fallen.

Vorteilhafte Weiterbildungen sind durch die Unteransprüche gekennzeichnet.

Im folgenden wird die Erfindung anhand der Zeichnungen näher erläutert. Es zeigen:
Fig. 1 ein erstes Ausführungsbeispiel des erfindungsgemäßen Transportfahrzeugs als Pritschenwagen mit Trägeraufbau,
Fig. 2 eine perspektivische Teilansicht eines Trägeraufbaus für einen Pritschenwagen ohne Abdeckung,
Fig. 3 ein zweites Ausführungsbeispiel des erfindungsgemäßen Transportfahrzeugs als Kastenwagen,
Fig. 4 ein drittes Ausführungsbeispiel des erfindungsgemäßen Transportfahrzeugs als anderer Typ von Kastenwagen,
Fig. 5 einen konventionellen A-förmigen Trägeraufbau,
Fig. 6 zwei an einem Pritschenwagen angebrachte, konventionelle Trägeraufbauten,
Fig. 7A einen konventionellen Trägeraufbau an einem Pritschenwagen, 7B einen erfindungsgemäßen Trägeraufbau an einem Pritschenwagen, Fig. 7C einen konventionellen Trägeraufbau an einem Kastenwagen und demgegenüber Fig. 7D einen erfindungsgemäßen Trägeraufbau an einem Kastenwagen,
Fig. 8 ein Ausführungsbeispiel für einen erfindungsgemäßen A-förmigen Trägeraufbau,
Fig. 9A und 9B einen konventionellen und einen mit den erfindunsgemäßen Merkmalen ausgestatteten A-förmigen Trägeraufbau zum Vergleich und Fig. 10 einen Teilausschnitt aus dem Trägeraufbau nach Fig. 8.

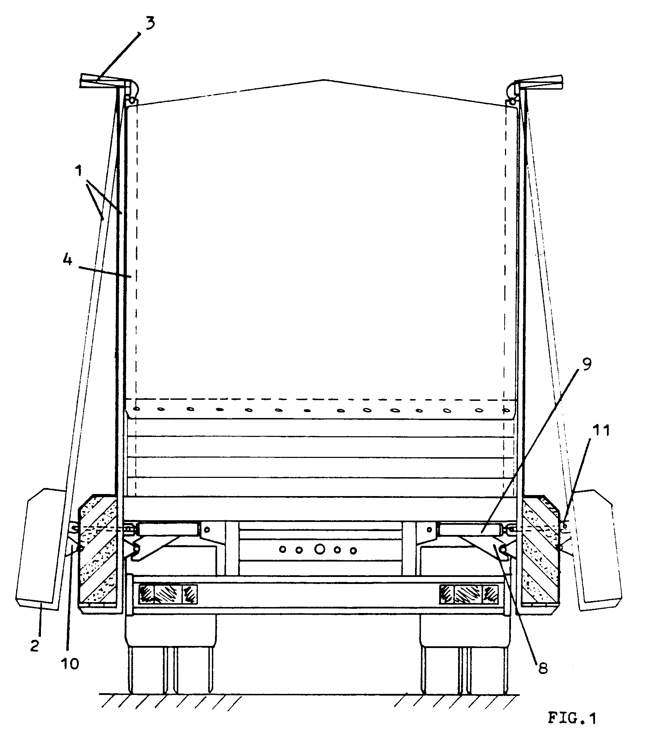

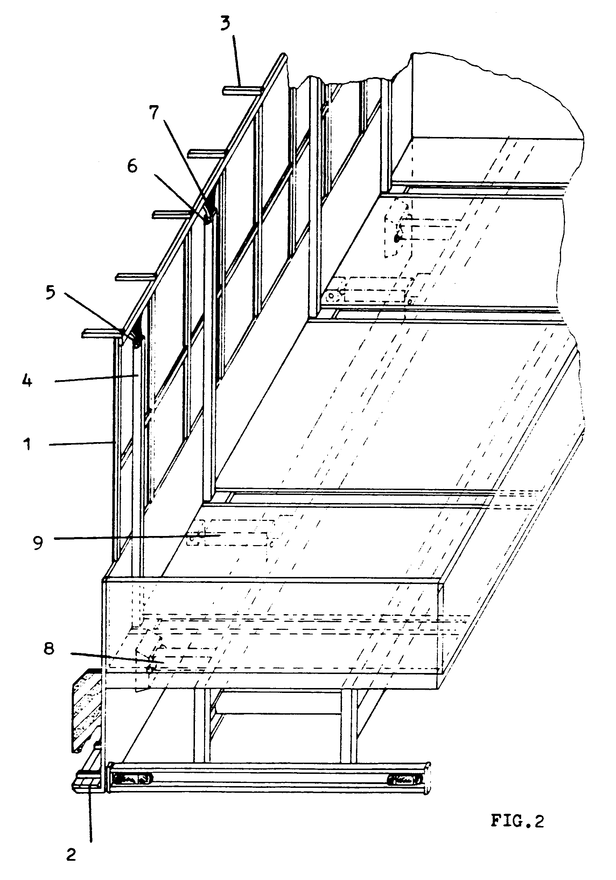

Der in Fig. 1 und 2 gezeigte Trägeraufbau für eine skizzierten Pritschenwgen umfaßt einen Schwenkrahmen 1 in der üblichen gitterartigen Ausbildung mit einer Auflagefläche 2, die sich rechtwinklig vom unteren Rand des Schwenkrahmens 1 erstreckt und zur Abstützung der Unterkanten von flächigen Gegenständen wie Flachgläsern dient. Am oberen Rand des Schwenkrahmens 1 sind ebenfalls in bekannter Weise ausgebildete rechtwinklig angesetzte Streben 3 vorgesehen.

Im Pritschenwagen sind senkrechte Stützpfeiler 4 vorgesehen, an deren oberem Ende jeweils ein klauenartiges, nach oben offenes Schwenklager 5 eingearbeitet ist, in das eine kurze Schwenkwelle 6 eingefügt ist, die über ein sich nach oben verbreiterndes Verbindungsstück 7 mit dem obersten Holm des Schwenkrahmens 1 fest verbunden ist.

Am lediglich angedeuteten Pritschenaufbau des Wagens sind je zwei Entlastungslager 8 und Schwenkvorrichtungen 9 angebracht. Die Entlastungslager 8 dienen zur Abstützung und Arretierung des Schwenkrahmens 1 in seiner senkrechten Stellung und umfassen ein Lagerteil mit schiefer Ebene, auf die ein am Schwenkrahmen 1 auf der dem Auflageteil 2 entgegengesetzten Seite angebrachter Bolzen 10 aufgleitet (Fig. 1).

Die Schwenkvorrichtung 9 weist einen beweglichen, mechanischen, elektromechanischen, hydraulischen oder pneumatischen Kolben auf, der auf der der Auflagefläche 2 abgewandten Seite des Schwenkrahmens 1 am dort befindlichen Gegenlager 11 angreift. Um die Verschwenkbewegung zu ermöglichen, sind die Schwenkvorrichtungen 9 in der angedeuteten Weise drehbar am Pritschenaufbau angelenkt. Die Schwenkvorrichtungen 9 sind im unteren Bereich des Trägeraufbaus angeordnet, so daß ein möglichst großer Abstand zwischen oberem Schwenklager 5 und ihrem unterem Anlenkpunkt gegeben ist.

Mittels der Schwenkvorrichtungen 9 wird der Schwenkrahmen 1 in die vertikale Transportstellung auf die Entlastungslager 8 gezogen, so daß der gesamte Aufbau stabilisiert wird. Falls dies gewünscht wird, kann eine zusätzliche, mit dem Entlastungslager 8 gekoppelte Verriegelungseinrichtung in der senkrechten Stellung für eine zusätzliche Sicherung sorgen.

Die Anzahl der Entlastungslager und Schwenkvorrichtungen kann variiert werden. Ferner ist es auch möglich, eine einstückige oder unterbrochene Schwenkwelle an den Stützpfeilern 4 vorzusehen und an den Verbindungsstücken 7 Lagerklauen- oder greifer auszubilden. Schließlich kann auch der oberste Holm des Schwenkrahmens 1 rund ausgebildet werden, so daß keine zusätzliche Schwenkwelle mehr anzubringen ist.

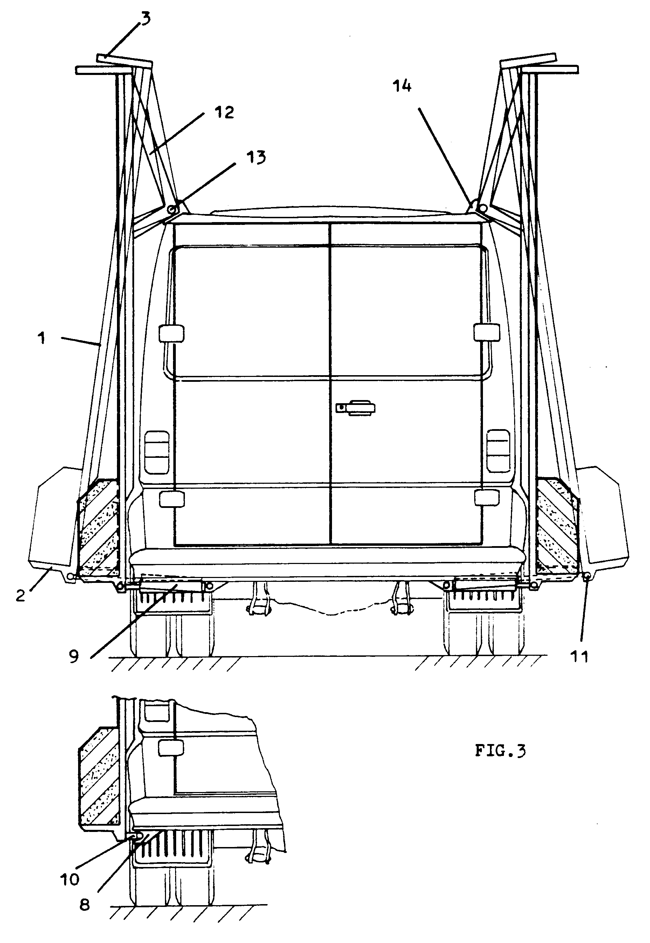

In der Fig. 3 ist der Trägeraufbau für einen Kastenwagen modifiziert. Am Schwenkrahmen 1 ist ein Winkelstück 12 angesetzt, dessen Winkelspitze sich in Höhe der Dachrinne des Wagens befindet und dessen oberer, längerer Schenkel sich bis zum oberen Ende des Schwenkrahmens 1 erstreckt.

In die Winkelspitze ist eine Schwenkwelle 13 eingefügt, die in ein Schwenklager 14 eingehängt ist, welches an der Dachrinne befestigt ist. Auf jeder Seite des Wagens sind mehrere solcher Schwenklager vorgesehen, in die der Trägeraufbau über das Winkelstück 12 einhängbar ist.

Auch dieses Ausführungsbeispiel ist wiederum mit Schwenkvorrichtungen 9 und Entlastungslagern 8 ausgebildet, die prinzipiell denen des ersten Ausführungsbeispiels entsprechen, jedoch am Fahrgestell befestigt sind.

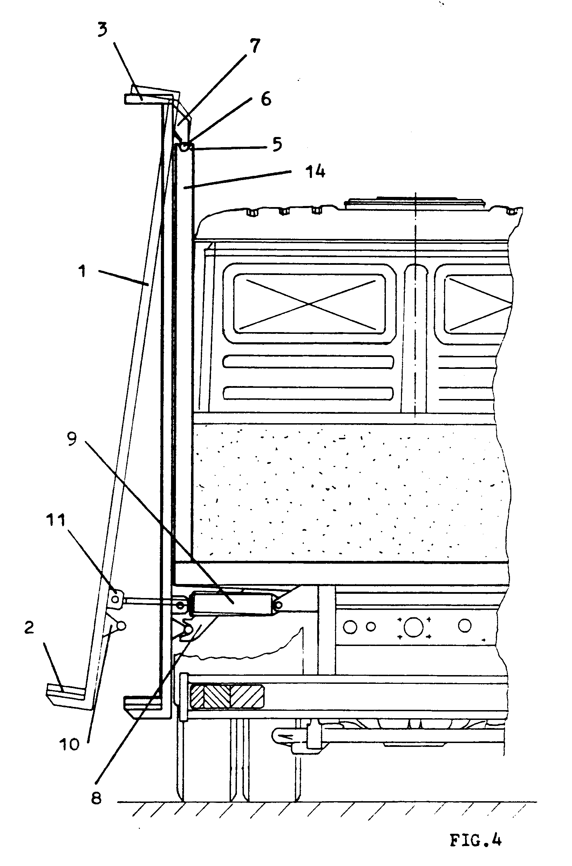

Im Ausführungsbeispiel der Fig. 4 ist wiederum ein Kastenwagen mit dem erfindungemäßen Trägeraufbau ausgestattet, wobei in diesem Fall ähnlich wie beim Pritschenwagen der Fig. 1 und 2 senkrechte Stützpfeiler 4 vorgesehen sind, die sich fast bis zum oberen Holm des Schwenkrahmens 1 erstrecken, das über Verbindungsstücke 7 und eine angesetzte Schwenkwelle 6 in Schwenklagern 5 gehaltert ist. Die übrigen Elemlente 8 bis 11 entsprechen denen der vorhergehenden Ausführungsbeispiele.

Auch hier kann das Schwenk- oder Traglager andersartig ausgebildet werden. Die Schwenkvorrichtungen können auch motorisch realisiert sein. Auch das Entlastungslager ist nicht auf die gezeigte Ausführung beschränkt. Stattdessen ist z.B. wiederum eine Umkehr möglich, wobei an der Rückseite des Schenkrahmens eine Art Greifvorrichtung angebracht wird, die sich auf eine Lagerstütze schiebt, die wahlweise am Fahrgestell oder auch der Karosserie jedes Fahrzeugs angebracht ist.

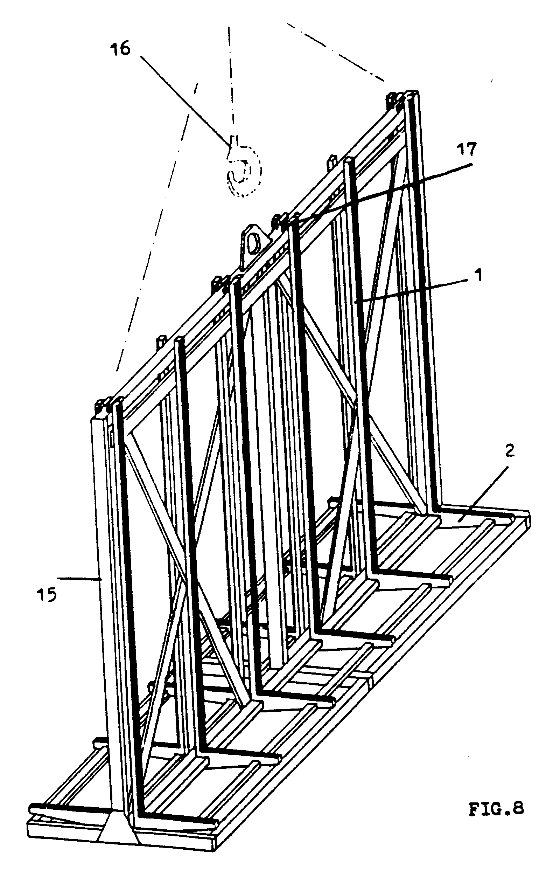

Die Fig. 5 zeigt ein übliches, sogenanntes A-Gestell mit zwei schräg fixierten Schwenkrahmen 1 mit Auflageflächen 2 für flächenartige Gegenstände. Demgegenüber umfaßt der erfindungsgemäße Trägeraufbau gemäß Fig. 8, der mittels eines Kranhakens 16 anhebbar ist, einen Tragrahmen 15 mit einem Schwenklager 17, das beispielsweise ähnlich wie das anhand der Fig. 2 erläuterte ausgebildet sein kann und dazu dient, die beiden Schwenkrahmen 1 am horizontalen Querträger des Tragrahmens 15 einzuhängen.

Die Fig. 9A, 9B verdeutlichen den Vorteil der erfindungsgemäßen Lösung mit Schwenkrahmen 1, gegenüber Gestellteilen (1), wobei die Schwenkrahmen 1 ähnlich den Lösungen für an Fahrzeugen anzubringenden Trägeraufbauten mit einem Entlastungslager 18 versehen sind.

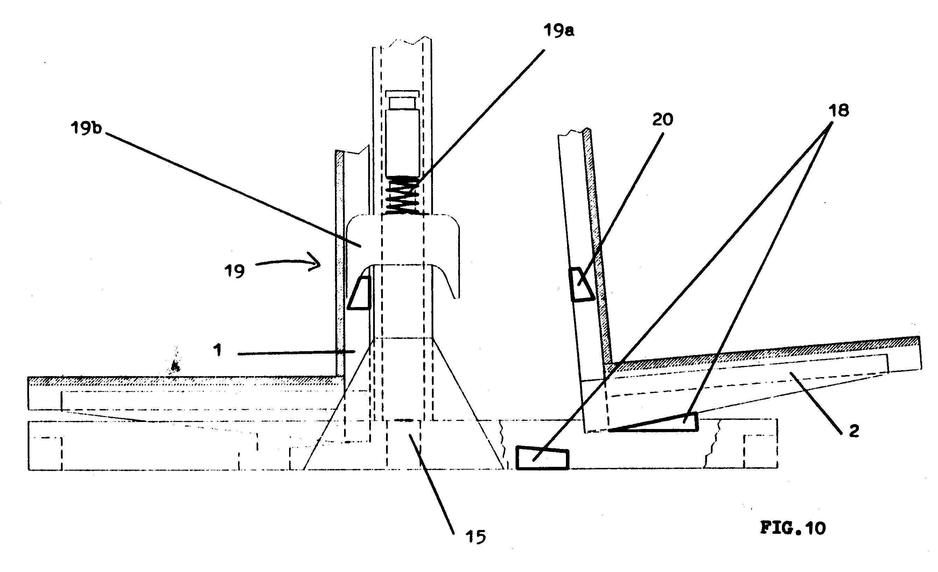

Das Entlastungslager 18 ist in Fig. 10 skizziert. In diesem Ausführungsbeispiel umfaßt das Entlastungslager für die vertikale Stellung der Schwenkrahmen 1 zwei Keilflächen, die durch einen auf der Unterseite der Auflagefläche 2 des Schwenkrahmens 1 angebrachten Keil und einen im waagerechten Stützträger des Tragrahmens 15 vorgesehenen Keil entgegengesetzt abgeschrägter Keilfläche realisiert sind. Bei Senkrechtstellung des Schwenkrahmens 1 gleitet seine Keilfläche auf die des Tragrahmens 15 auf, so daß die entstehenden Kräfte im Entlastungslager abgefangen werden.

Um die senkrechtgestellten Schwenkrahmen 1 darüberhinaus zu arretieren, ist eine Arretierungseinrichtung 19 vorgesehen, die eine im vertikalen unteren Teil des Tragrahmens 15 angebrachte Feder 19a umfaßt, die auf die Oberseite eines durch sie vertikal verschiebbaren Arretierungsteils mit einer Keilfläche 19b wirkt. Das Arretierungsteil weist zwei seitlich über den Tragrahmen hinausragende, innen abgeschrägte und sich nach unten erstreckende Arme auf, die dazu dienen, einen an jedem Schwenkrahmen 1 angebrachten Keil 20 zwischen ihrer schrägen Fläche und dem vertikalen Pfeiler des Tragrahmens 15 in der in Fig. 10 gezeigten Weise zu arretieren. Durch diese Arretierungseinrichtung 19 ist ein automatisches Nachspannen der senkrecht gestellten Schwenkrahmen 1 in den Entlastungslagern 18 gewährleistet.

Falls dies gewünscht wird, können auch diese kranbaren Trägeraufbauten mit mechanischen oder motorischen Schwenkvorrichtungen im unteren Bereich des Tragrahmens 15 versehen werden, die an einem Gegenlager am unteren Bereich der Schwenkrahmen angreifen.

Durch die erfindungsgemäß auch bei den kranbaren Aufbauten möglich vertikale Transportstellung der Ladegegenstände und den damit verbundenen geringeren Querkräften sind solche Konstruktionen leichter und kostengünstiger ausführbar. Man spart Nutzlast bei besser genutzter Ladefläche.

Als zusätzliche Vorteile ergeben sich eine bessere Stabilität gegenüber herkömmlichen schwenkbaren Aufbauten (Fig. 6) sowie ein geringerer Verschleiß.

## Patentansprüche

1. Trägeraufbau als Lager- und Transportgestell zur Lagerung und/oder zum Transport von flächigen Gegenständen mit einem oder zwei Gestellteilen, gegen das bzw. die die flächigen Gegenstände lehnen, und einer im unteren Bereich jedes Gestellteils rechtwinklig angesetzten Auflagefläche für die untere Kante der Gegenstände,
**dadurch gekennzeichnet**,
daß der Trägeraufbau einen nach oben ragenden Tragrahmen (15) mit senkrechten Pfeilern aufweist, daß das oder die Gestellteile als Schwenkrahmen (1) ausgebildet ist bzw. sind, die mit Hilfe eines oder mehrerer Schwenklager (17) in ihrem oberen Bereich oben an dem Tragrahmen (15) aufgehängt sind, und daß HaLterungen im unteren Bereich der senkrechten Pfeiler des Tragrahmens (15) als Arretierungseinrichtungen (19) einerseits zur senkrechten Arretierung des oder der Schwenkrahmen (1) für den Transport und die Lagerung der flächigen Gegenstände und andererseits zur geschrägten Halterung des oder der Schwenkrahmen (1) für das Laden der flächigen Gegenstände vorgesehen sind.

2. Transportfahrzeug mit Trägeraufbau zum Transport von flächigen Gegenständen mit einem oder zwei an einer bzw. beiden Längsseiten des Transportfahrzeugs mit Hilfe eines oder mehrerer Schwenklager (5,6,7;13,14) angebrachten, entweder senkrecht- oder schrägstellbaren Schwenkrahmen, gegen den bzw. die die flächigen Gegenstände lehnen, und mit einer im unteren Bereich jedes Schwenkrahmens rechtwinklig angesetzten Auflagefläche für die untere Kante der Gegenstände, bei dem sich die Schwenkrahmen in ihrer senkrechten, für den Transport der flächigen Gegenstände vorgesehenen Stellung außerhalb des Fahrgestells bzw. der Karosserie befinden,
**dadurch gekennzeichnet**,
daß die Schwenkrahmen (1) mit Hilfe der Schwenklager (5,6,7;13,14; 14) in ihrem oberen Bereich oben an an der Seite angebrachten Stützpfeilern (4) oder oben am Kastenaufbau des Transportfahrzeugs aufgehängt sind und daß sich am Transportfahrzeug in Höhe des unteren Bereichs des oder der Schwenkrahmen (1) Halterungen zur Abstützung des oder der Schwenkrahmen in deren senkrechter Transportstellung bzw. deren Schrägstellung zum Laden befinden.

3. Trägeraufbau nach Anspruch 1 oder 2,
**dadurch gekennzeichnet**,
daß mit den Halterungen Entlastungslager (8;18) gekoppelt sind.

4. Trägeraufbau nach Anspruch 1 oder 2,
**dadurch gekennzeichnet**,
daß die Entlastungslager (8:18) schiefe Ebenen aufweisen, auf die an den Schwenkrahmen (1) vorgesehene Körper aufgleiten.

5. Trägeraufbau nach einem der vorhergehenden Ansprüche,
**dadurch gekennzeichnet**,
daß die Schwenklager (17:5,14) ein oder mehrere Schwenkwellen aufweisen sowie die Schwenkwellen umgreifende Teile.

6. Trägerausbau nach einem der vorhergehenden Ansprüche,
**dadurch gekennzeichnet**,
daß am unteren Bereich der Schwenkrahmen (1) zumindest eine Schwenkvorrichtung (9) über ein dort in diesem Bereich angebrachtes Gegenlager (11) angreift.

7. Trägeraufbau nach Anspruch 6,
**dadurch gekennzeichnet**,
daß die Schwenkvorrichtung mechanisch, elektrisch, pneumatisch, hydraulisch oder motorisch ausgebildet ist.

8. Trägeraufbau nach einem der Ansprüche 2 bis 7 in Abhängigkeit von Anspruch 2,
**dadurch gekennzeichnet**,
daß die Schwenkvorrichtung je nach Transportfahrzeug am Pritschenaufbau, am Fahrgestell oder an der Karosserie drehbar angelenkt ist.

9. Trägeraufbau nach einem der Ansprüche 2 bis 8 in Abhängigkeit von Anspruch 2,
**dadurch gekennzeichnet**,
daß der oder die Schwenkrahmen ein Winkelstück (12) umfaßt bzw. umfassen, das bzw. die so dimensioniert und am Schwenkrahmen (1) angesetzt ist bzw. sind, daß sich einer seiner Schenkel bis zum oberen Ende des Schwenkrahmens erstreckt und seine Winkelspitze bis zur Dachrinne des Transportfahrzeugs reicht, wo sich das Schwenklager (13,14) befindet.

10. Trägeraufbau nach Anspruch 3 in Abhängigkeit von Anspruch 1,
**dadurch gekennzeichnet**,
daß im unteren Auflageträger des Tragrahmens (15) und im unteren Bereich des Schwenkrahmens (1) Teile eines bei Senkrechtstellung der Gestellteile wirksamen Entlastungslagers (18) vorgesehen sind.

11. Trägeraufbau nach Anspruch 10,
**dadurch gekennzeichnet**,
daß die Arretierungseinrichtung eine federbelastete Keilfläche (19b) aufweist, die zur Arretierung einer am jeweiligen Schwenkrahmen (1) vorgesehenen Keilfläche (20) dient.

12. Trägeraufbau nach Anspruch 10 oder 11,
**dadurch gekennzeichnet**,
daß das Entlastungslager (18) eine schiefe Ebene am Tragrahmen (15) und eine bei Senkrechtstellung des Schwenkrahmens (1) aufgleitende schiefe Ebene auf der Unterseite der Auflagefläche (2) des Gestellteils (1) aufweist.

## Claims

1. Support structure as a storage and transport framework for storage and/or for transport of flat articles, with one or two frame parts against which the flat articles lean, and with a support surface applied at right angles at the foot of each frame part for the bottom edge of the articles,
characterised in that
the support structure has an upwardly-projecting support frame (15) with vertical pillars, in that the frame part or frame parts is/are in the form of a pivoting frame (1) suspended at its top on the support frame (15) with the said of one or more pivot bearings (17), and in that retaining means are provided at the foot of the vertical pillars of the support frame (15) on the one hand as stop means (19), in order vertically to secure the pivoting frame or frames (1) for transport and storage of the flat articles and, on the other hand in order to secure the pivoting frame or frames (1) in an oblique position for loading the flat articles.

2. Transport vehicle with support structure for transporting flat articles with one or two pivoting frames, which may be positioned either vertically or obliquely, and attached to one or both longitudinal sides of the transport vehicle with the aid of one or more pivoting bearings (5, 6, 7; 13, 14) the flat articles leaning against the said pivoting frame or frames, and with a support surface applied at right angles at the foot of each pivoting frame for the bottom edge of the flat articles, in which the pivoting frames are located in their vertical position provided for transport of the flat articles, outside the vehicle chassis of the bodywork,
characterised in that
the pivoting frames (1) are suspended at the top with the aid of the pivoting bearings (5, 6, 7; 13, 14; 14) at their upper part on support pillars (4) attached to the side, or at the top on the box body of the transport vehicle, and in that there are located on the transport vehicle, level with the lower region of the pivoting frame or frames (1) securing means for supporting the pivoting frame or frames in their vertical transport position for loading.

3. Support structure according to claim 1 or 2,
characterised in that
load-relieving bearings (8; 18) are coupled to the securing means.

4. Support structure according to claim 1 or 2,
characterised in that
the load-relieving bearings (8; 18) have skewed planes upon which the bodies provided on the pivoting frames (1) slide.

5. Support structure according to one of the preceding claims,
characterised in that
the pivoting bearings (17; 5, 14) have one or more pivoting shafts, and parts surrounding the pivoting shafts.

6. Support structure according to one of the preceding claims,
characterised in that
at least one pivoting device (9) engages in the lower region of the pivoting frames (1) over a counter-bearing (11) attached at that point.

7. Support structure according to claim 6,
characterised in that
the pivoting device is designed as mechanical, electrical, pneumatic, hydraulic or motor-driven.

8. Support structure according to one of claims 2 to 7 in dependence on claim 2,
characterised in that
depending on the transport vehicle, the pivoting device is rotarily articulated to the flatbed body, to the chassis or to the bodywork.

9. Support structure according to one of claims 2 to 8 in dependence on claim 2,
characterised in that
the pivoting frame or frames comprise(s) an angled piece (12) which is of such dimensions, and is applied to the pivoting frame (1) in such a manner that one of its legs extends as far as the top end of the pivoting frame, and its angular apex extends as far as the roof ridge of the transport vehicle, where the pivoting bearing (13, 14) is located.

10. Support structure according to claim 3 in dependence on claim 1,
characterised in that
there are provided, in the lower support bearer of the supporting frame (15) and in the lower region of the pivoting frame (1), parts of a load-relieving bearing (18) which is active in the vertical position of the frame parts.

11. Support structure according to claim 10,
characterised in that
the retaining device has a spring-loaded wedge surface (19b) serving to lock a wedge surface (20) provided at the respective pivoting frame (1)

12. Support structure according to claim 10 or 11,
characterised in that
the load-relieving bearing (18) has a skewed plane on the supporting frame (15) and, when the pivoting frame (1) is in its vertical position, a skewed plane sliding up on to the underside of the support surface (2) of the frame part (1)

## Revendications

1. Châssis de support et de transport pour stocker et/ou transporter des objets plats, comportant un ou deux éléments de support contre lequel ou lesquels les objets plats s'appuient, et une surface d'appui destinée à l'arête inférieure des objets et placée à angle droit dans la zone inférieure de chaque élément de support, caractérisé en ce que le chassais présente un cadre porteur (15) dépassant vers le haut et comportant des montants verticaux, en ce que le ou les éléments de support est ou sont conçus comme châssis articulés (1) qui sont accrochés dans leur partie supérieure en haut du cadre porteur (15), à l'aide d'un ou de plusieurs paliers pivotants (17) et en ce que des fixations sont prévues dans la partie inférieure des montants verticaux du cadre porteur (15) comme dispositifs d'arrêt (19) d'une part pour l'arrêt vertical du ou des châssis articulés (1) pour le transport et le stockage des objets plats et d'autre part pour la fixation inclinée du ou des châssis articulés (1) pour le chargement des objets plats.

2. Véhicule de transport comportant un châssis pour le transport d'objets plats présentant un ou deux châssis articulés pouvant être placés à la verticale ou pouvant s'incliner, disposés sur l'un ou les deux côtés longitudinaux du véhicule de transport à l'aide d'un ou de plusieurs paliers pivotants (5, 6, 7 ; 13, 14), et contre lequel ou lesquels s'appuient les objets plats, et une surface d'appui destinée à l'arête inférieure des objets et placée à angle droit dans la zone inférieure de chaque châssis articulé, et dans lequel (véhicule de transport) les châssis articulés se trouvent à l'extérieur du châssis ou de la carrosserie lorsqu'ils sont dans leur position verticale prévue pour le transport des objets plats, caractérisé en ce que les châssis articulés (1) sont accrochés dans leur partie supérieure à l'aide des paliers pivotants (5, 6, 7 ; 13, 14), en haut des piliers de soutien (4) placés sur le côté ou en haut de la caisse du véhicule de transport et en ce que sur le véhicule de transport, à hauteur de la partie inférieure du ou des châssis articulés (1), se trouvent des fixations pour soutenir le ou les châssis articulés dans leur position verticale ou inclinée pour le chargement.

3. Châssis selon la revendication 1 ou la revendication 2, caractérisé en ce que des paliers de déchargement (8 ; 18) sont couplés aux fixations.

4. Châssis selon la revendication 1 ou la revendication 2, caractérisé en ce que les paliers de déchargement (8 ; 18) présentent des plans inclinés sur lesquels glissent les corps prévus sur les châssis articulés (1).

5. Châssis selon l'une quelconque des revendications précédentes, caractérisé en ce que les paliers pivotants (17 ; 5, 14) présentent un ou plusieurs arbres articulés ainsi que les éléments enveloppant les arbres articulés.

6. Châssis selon l'une quelconque des revendications précédentes, caractérisé en ce que sur la partie inférieure des châssis articulés (1), est disposé au moins un dispositif de pivotement (9), au-dessus d'une butée (11) placée dans cette zone.

7. Châssis selon la revendication 6, caractérisé en ce que le dispositif de pivotement est conçu comme étant mécanique, électrique, pneumatique, hydraulique ou actionné par moteur.

8. Châssis selon l'une quelconque des revendications 2 à 7 en fonction de la revendication 2, caractérisé en ce que le dispositif de pivotement est monté de manière pivotante sur la structure à plateforme, sur le châssis ou sur la carrosserie en fonction du véhicule de transport.

9. Châssis selon l'une quelconque des revendications 2 à 8 en fonction de la revendication 2, caractérisé en ce que le ou les châssis articulés englobe ou englobent une pièce angulaire (12) qui est dimensionnée et fixée sur le châssis articulé (1) de telle sorte que l'un de ses côtés s'étend jusqu'à l'extrémité supérieure du châssis articulé et que le sommet de l'angle arrive jusqu'à la gouttière du véhicule de transport où se trouve le palier pivotant (13, 14)

10. Châssis selon la revendication 3 en fonction de la revendication 1, caractérisé en ce que dans le support inférieur du cadre porteur (15) et dans la partie inférieure du châssis articulé (1), sont prévus des éléments d'un palier de déchargement (18) actifs lorsque les éléments du châssis sont en position verticale.

11. Châssis selon la revendication 10, caractérisé en ce que le dispositif d'arrêt présente une surface en coin à ressort (19b) qui permet d'arrêter une surface en coin (20) prévue sur le châssis articulé (1) respectif.

12. Châssis selon la revendication 10 ou 11, caractérisé en ce que le palier de déchargement (18) présente un plan incliné sur le cadre porteur (15) et sur le côté inférieur de la surface d'appui (2) de l'élément de châssis (1), un plan incliné, glissant en position verticale du châssis articulé (1).
